Europäisches Patentamt

European Patent Office

Office européen des brevets

(11) Publication number: **0 093 998**
**B1**

(12) EUROPEAN PATENT SPECIFICATION

(45) Date of publication of patent specification: 02.09.87

(51) Int. Cl.⁴: **F 21 S 5/00,** G 02 B 6/04

(21) Application number: 83104325.2

(22) Date of filing: 02.05.83

(54) Photoradiator.

(30) Priority: 11.05.82 JP 78809/82
11.05.82 JP 78810/82
07.06.82 JP 97459/82
10.06.82 JP 99775/82

(43) Date of publication of application:
16.11.83 Bulletin 83/46

(45) Publication of the grant of the patent:
02.09.87 Bulletin 87/36

(84) Designated Contracting States:
CH DE FR GB IT LI SE

(56) References cited:
FR-A-1 325 014
FR-A-2 216 634
FR-A-2 220 144

(73) Proprietor: **Mori, Kei**
3-16-3-501, Kaminoge
Setagaya-ku Tokyo (JP)

(72) Inventor: **Mori, Kei**
3-16-3-501, Kaminoge
Setagaya-ku Tokyo (JP)

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath**
Maximilianstrasse 58
D-8000 München 22 (DE)

Courier Press, Leamington Spa, England.

## Description

The present invention relates to a photoradiator comprising an elongate light conducting member for conducting convergent light through an optical path which extends from one to the other end thereof, and light radiating means for radiating light radially outwardly from the optical path to the space which surrounds the photoradiator and with reflector means provided at the end of the conductor. Such a photoradiator is known from FR—A—22 20 144 document. This known photoradiator comprises at several points of an elongate light conducting member, light radiating means for radiating the light radially from the optical path. For this purpose, the elongate light conducting member is to be treated in a special manner, that is, it is necessary to provide a rough surface portion which has the function of light radiating means. In order to do this, the French patent suggests providing the light conducting member with a spiral roll which is wrapped around the light conducting member.

It is a task of the present invention to provide a photoradiator of the type above, which may be easily produced and which effectively radiates light routed through a light conducting member out to the ambience. According to the invention this task is solved with a photoradiator of the above type, which is characterised in that the light radiating means, which are hermetically enclosed by an enclosure, comprise a light diffusing material which is formed by sputtering a spiral strip of this material on the light conducting member, said light diffusing material being larger in refractive index than the light conducting member and that the reflecting means is provided as a flat reflecting surface at the end of the light conducting member. Preferred embodiments of the invention are claimed in the dependent claims.

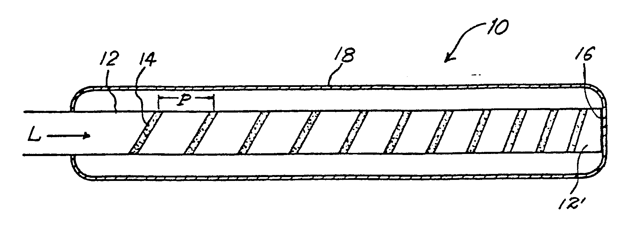

In the following, a photoradiator according to the invention is described with respect to the Figure, in which a sectional side elevation of an inventive photoradiator is depicted. Referring to the Figure, a photoradiator embodying the present invention is shown and generally designated by the reference numeral 10. The photoradiator 10 includes an elongate cylindrical light conducting member 12 for defining an optical path which extends from one end (not shown) to the other end 12' of the light conductor. Light L from the input end of the light conductor 12 is routed through the optical path to the output end 12' as indicated by an arrow in the drawing. A spiral strip of light diffusing material 14 is formed on the periphery of the light conductor 12 by sputtering and has a refractive index which is larger than that of the light conductor 12. In this construction, the light L will be effectively radiated to the outside via the light diffusing spiral strip 14 serving to illuminate a room, for example.

The spiral 14 has a pitch P which may either be even to the end 12' of the light conductor 12 or progressively reduced toward the end 12' i.e.,

along the direction of light conduction. Still, the progressively reduced pitch distribution will be advantageous over the even pitch distribution in view of the fact that the light intensity would otherwise decrease toward the end 12' of the light conductor 12.

A flat reflector 16 is mounted on the light output end 12' of the conductor 12. The reflector 16 will reflect the light incident thereon so that this part of the light L will be radiated radially through the light diffuser 14 together with the other part of the light L. This will enhance the diffusion efficiency and thereby effective illumination for a desired space. If desired, the reflector 16 may be replaced by the end 12' of the light conductor 12 which is treated to function in the same way as the reflector 16.

An enclosure or casing 18 is made of a transparent or semitransparent material and configurated to hermetically cover the light conductor 12 and spiral strip 14. The casing 18 protects the surface of the light conductor 12 from damage due to contact thereof with another object or from contamination due to dust and thumbs. Meanwhile, in the event the photoradiator 10 serves as an underwater light source such as in a chlorella culturing bath, the casing 18 will free the light conductor 12 from deposition of fur and thereby maintain it always clean. Another advantage attainable in such a case is that the light streaming out from the light diffuser 14 will be radiated into the surrounding water by way of the air layer within the casing 18 and thereby allowed to scatter itself over a desired range and in a desired direction. Should the casing 18 be absent when the photoradiator 10 is used under water, the light would come out only through a very narrow range at the end portion of the fiber optic cable.

## Claims

1. A photoradiator (10) comprising an elongate light conducting member (12) for conducting convergent light through an optical path which extends from one to the other end (12') thereof and with light radiating means (14) for radiating a light radially outwardly from the optical path to the space which surrounds the photoradiator and the reflector means (16) provided at the end of the conductor, characterised in that the light radiating means which are hermetically enclosed by an enclosure (18) comprises a light diffusing material which is formed by sputtering a spiral strip of this material on the light conducting member (12), said light diffusing material (14) being larger in refractive index than the light conducting member (12) and that the reflecting means is provided as a flat reflecting surface at the end of the light conducting member (12).

2. A photoradiator as claimed in claim 1, characterised in that the pitch of the spiral strip (14) is even along the axis of the light conducting member (12).

3. A photoradiator as claimed in claim 1, characterised in that the pitch of the spiral strip (14) progressively decreases and towards said other end (12') of the light conducting member (12).

4. A photoradiator as claimed in claim 1, characterised therein that the flat reflecting surface is provided by a reflector plate mounted on the other end (12') of the light conducting member (12).

5. A photoradiator as claimed in claim 1, characterised in that the enclosure (18) is made of a transparent material.

6. A photoradiator as claimed in claim 1, characterised in that the enclosure (18) is made of a semi-transparent material.

## Patentansprüche

1. Lichtleiter mit einem länglichen lichtleitenden Element (12), mit dem konvergierendes Licht über einen optischen Weg geleitet wird, der sich von einem zum anderen Ende (12') desselben erstreckt und mit einer lichtausstrahlenden Einrichtung (14), mit der Licht radial aus dem optischen Weg nach außen in den Raum, der den Lichtstrahler umgibt, ausgestrahlt werden kann und mit einer reflektierenden Einrichtung (16), die am Ende des Leiters vorgesehen ist, dadurch gekennzeichnet, daß die lichtabstrahlende Einrichtung, die vollständig in einer Ummantelung (18) eingeschlossen ist, ein lichtzerstreuendes Material aufweist, welches durch Auftragen eines spiralenförmigen Streifens des Materials auf dem lichtleitenden Element (12) ausgebildet ist, wobei das lichtzerstreuende Material (14) einen größeren Brechungsindex als das lichtleitende Element (12) hat und daß die reflektierende Einrichtung als flache reflektierende Oberfläche am Ende des lichtleitenden Elementes (12) ausgebildet ist.

2. Lichtstrahler nach Anspruch 1, dadurch gekennzeichnet, daß die Steigung des spiralenförmigen Streifens (14) entlang der Achse des lichtleitenden Elements (12) gleich ist.

3. Lichtstrahler nach Anspruch 1, dadurch gekennzeichnet, daß die Steigung des spiralenförmigen Streifens (14) zum anderen Ende (12') des lichtleitenden Elements (12) hin nach und nach abnimmt.

4. Lichtstrahler nach Anspruch 1, dadurch gekennzeichnet, daß die flache reflektierende Oberfläche von einer Reflektorplatte gebildet ist, die am anderen Ende (12') des lichtleitenden Elements (12) befestigt ist.

5. Lichtstrahler nach Anspruch 1, dadurch gekennzeichnet, daß die Ummantelung (18) aus einem durchsichtigen Material besteht.

6. Lichtstrahler nach Anspruch 1, dadurch gekennzeichnet, daß die Ummantelung (18) aus einem halbdurchsichtigen Material besteht.

## Revendications

1. Un photoradiateur (10) comprenant un élément allonge conducteur de lumière (12) pour conduire de la lumière convergente selon un trajet optique qui s'étend d'une de ses extrémités à l'autre (12'), et des moyens de rayonnement de lumière (14) pour rayonner de la lumière radialement vers l'extérieur à partir du trajet optique et jusque dans l'espace qui entoure le photoradiateur, un moyen réflecteur (16) étant placé à l'extrémité de l'élément conducteur, caractérisé en ce que les moyens de rayonnement de lumière qui sont hermétiquement entourés par une enveloppe (18) comprennent une matière de diffusion de lumière qui est formée par projection d'une bande en spirale de ladite matière sur l'élément conducteur de lumière (12), ladite matière de diffusion de lumière (14) ayant un indice de réfraction supérieur à celui de l'élément conducteur de lumière (12), et en ce que le moyen réfléchissant est agencé sous forme d'une surface réfléchissante plane placée à l'extrémité de l'élément conducteur de lumière (12).

2. Un photoradiateur tel que revendiqué dans la revendication 1, caractérisé en ce que le pas de la bande en spirale (14) est constant le long de l'axe de l'élément conducteur de lumière (12).

3. Un photoradiateur tel que revendiqué dans la revendication 1, caractérisé en ce que le pas de la bande en spirale (14) diminue progressivement en direction de ladite autre extrémité (12') de l'élément conducteur de lumière (12).

4. Un photoradiateur tel que revendiqué dans la revendication 1, caractérisé en ce que la surface réfléchissante plane est formée par une plaque réfléchissante montée sur l'autre extrémité (12') de l'élément conducteur de lumière (12).

5. Un photoradiateur tel que revendiqué dans la revendication 1, caractérisé en ce que l'enveloppe (18) est formée d'une matière transparente.

6. Un photoradiateur tel que revendiqué dans la revendication 1, caractérisé en ce que l'enveloppe (18) est formée d'une matière semitransparente.